# FASCICULE DE BREVET EUROPEEN

(11) **EP 0 706 150 B1**
(45) Date de publication et mention de la délivrance du brevet: **12.01.2000**
(21) Numéro de dépôt: 95402144.0
(22) Date de dépôt: 25.09.1995
(51) Int. Cl.: G06K 17/00

(54) **Procédé de personnalisation en série de cartes**
Verfahren zur Massenerzeugung von individuell gestalteten Karten
Method for personalisation of serial cards

(30) Priorité: 07.10.1994 FR 9412191
(43) Date de publication de la demande: 10.04.1996
(73) Titulaire: SOCIETE D'ETUDES ET DE REALISATION DE PROTECTION ELECTRONIQUE INFORMATIQUE ELECTRONIQUE SECURITE MARITIME S.E.R.P.E.-I.E.S.M., F-56520 Guidel (FR)
(72) Inventeur: Audren, James, F-75116 Paris (FR)
(74) Mandataire: Ballot, Paul Denis Jacques

(56) Documents cités:
- EP-A- 0 341 524
- EP-A- 0 440 814
- WO-A-89/03098
- DE-A- 3 528 199

## Description

L'invention concerne la personnalisation de cartes comme par exemple les cartes d'identité ou les cartes bancaires du type comportant ou non des éléments mémorisants tels que des pistes magnétiques ou un circuit intégré contenant une mémoire programmable.

WO-A-89 03 098 expose un système pour délivrer des tickets d'avion. Dans un lieu de délivrance de tickets, des données par exemple, le nom du passager, le numéro de vol etc. sont imprimées sur le ticket et sont enregistrées sur une bande magnétique du ticket. En outre, un code d'identification (numéro de passeport) et un code de sécurité sont enregistrés sur la bande magnétique du ticket. Le code de sécurité est aussi enregistré dans un ordinateur central. Quand le passager arrive à l'aéroport, le ticket est lu magnétiquement et les données sont vérifiées dans l'ordinateur central. Ensuite, le nombre de pièces de bagages, le numéro du siège dans l'avion etc. sont enregistrés et imprimés sur le ticket qui sert maintenant de carte d'embarquement.

Classiquement, l'opération de personnalisation consiste à prendre une carte vierge ou préimprimée et à inscrire sur celle-ci et/ou dans sa mémoire un ensemble d'informations relatives au titulaire de la carte. Ainsi, dans le cas d'une carte d'identité, ces informations seront par exemple l'état civil de la personne, sa signature et son portrait sous forme numérique, la date limite de validité de la carte, etc.

Toutes ces informations sont initialement contenues dans une base de données formée de fichiers, chaque fichier étant spécifique d'une personne ayant fait une demande de carte.

La personnalisation d'une carte s'effectue généralement en plusieurs étapes successives, chaque étape utilisant un équipement spécifique à une opération ou à un ensemble d'opérations déterminées. Ainsi, la personnalisation d'une carte d'identité à mémoire peut débuter par une programmation de la mémoire pour y inscrire les données d'état civil, la date de validité de la carte ainsi que la signature et le portrait de la personne sous forme numérique compressée. On effectue ensuite sur la carte une impression en noir et blanc des données d'état civil et de la signature puis l'impression en couleur du portrait de la personne. Le processus se termine par un traitement de protection consistant à appliquer une couche de vernis sur les faces de la carte. Bien entendu, certaines des étapes mentionnées ci-dessus peuvent être elles-mêmes décomposées en plusieurs étapes élémentaires, comme par exemple des impressions successives en plusieurs couleurs de base pour réaliser une impression en couleur. De même, les opérations d'impression peuvent être subdivisées en deux opérations successives pour imprimer séparément les deux faces de la carte.

En pratique, les opérations de personnalisation sont réalisées dans un atelier de personnalisation qui opère sur des séries entières de cartes. Chaque carte d'une série est alors traitée par une succession d'opérations effectuées dans un ordre déterminé.

Le fait que la personnalisation nécessite plusieurs étapes successives et réalisées par des machines différentes entraîne cependant le risque de ne pas inscrire les bonnes informations sur ou dans la carte. Tel serait le cas si par exemple l'ordre des cartes dans la série était modifié suite à des manipulations.

Aussi, l'invention a pour but de remédier à cet inconvénient.

Dans ce but, l'invention a pour objet un procédé de personnalisation en série de cartes, du type utilisant une base de données comprenant des fichiers associés respectivement à des personnes pour lesquelles des cartes personnalisées doivent être réalisées, chacun desdits fichiers contenant des informations spécifiques à une personne, ledit procédé comportant pour chaque carte à personnaliser une pluralité d'étapes de personnalisation consistant chacune à inscrire sur et/ou dans ladite carte une partie des informations d'un fichier déterminé, ledit procédé étant caractérisé en ce qu'il comporte en outre une étape préliminaire d'identification consistant :
- à attribuer une donnée d'identification à chaque nouvelle carte à personnaliser et à un des fichiers de la base de données et à associer dans la base de données ladite donnée d'identification audit fichier et
- à marquer ladite nouvelle carte avec un élément d'identification représentatif de ladite donnée d'identification
et en ce que chacune desdites étapes de personnalisation d'une carte débute par une lecture de l'élément d'identification figurant sur ladite carte et la détermination de la donnée d'identification correspondante et se poursuit par un accès à ladite partie d'informations du fichier qui est associé à ladite donnée d'identification.

Ce procédé présente en outre l'avantage de s'affranchir de la contrainte d'effectuer les opérations dans un ordre déterminé. Il permet d'autre part une grande souplesse d'organisation de l'atelier de personnalisation. Par exemple, pour tenir compte du fait que certaines étapes sont beaucoup plus longues que d'autres, les étapes longues peuvent être effectuées en parallèle sur plusieurs machines de façon à optimiser le flux de production.

Par ailleurs, l'existence d'un élément d'identification inscrit sur la carte peut être exploitée dans un but de sécurisation de la carte. Ainsi, selon un autre aspect de l'invention, on prévoira que la donnée d'identification est fonction d'une partie au moins des informations du fichier qui doivent être inscrites sur et/ou dans la carte.

Ainsi, la donnée d'identification pourra contenir une clé calculée à partir de certaines des données accessibles à partir de la carte, au moyen d'un algorithme de chiffrement approprié. Il sera alors possible de détecter d'éventuelles falsifications en appliquant l'algorithme aux données pouvant être extraites de la carte et en comparant le résultat obtenu à la clé du numéro d'identification.

Plusieurs méthodes d'attribution des données d'identification peuvent être envisagées. Selon une première possibilité, chaque donnée d'identification est spécifique d'une seule des cartes en cours de personnalisation mais une donnée d'identification d'une carte dont la personnalisation est terminée peut être réattribuée à une nouvelle carte à personnaliser.

Cette première solution présente l'avantage de réduire au maximum la taille de la donnée d'identification et, par conséquent, la surface réservée sur la carte pour y inscrire l'élément d'identification correspondant.

Selon une autre possibilité, chaque donnée d'identification est spécifique d'un seul des fichiers de la base de données mais une donnée d'identification déjà attribuée à un fichier d'une base de données peut être attribuée à un autre fichier d'une autre base de données.

Cette solution présente l'avantage de simplifier l'attribution des données d'identification pour chaque série de personnalisation qui est associée à une base de données déterminée.

Selon encore une autre possibilité, chaque donnée d'identification est spécifique d'un seul fichier. Il en résulte la possibilité d'un contrôle complémentaire de la validité d'une carte en accédant au fichier associé à la donnée d'identification et en contrôlant la cohérence entre les données inscrites sur ou dans la carte avec celles du fichier.

Selon un autre aspect, le procédé est caractérisé en ce que chaque donnée d'identification est fonction de données relatives aux circonstances de réalisation de la personnalisation, telles que sa date et/ou un numéro représentatif de l'équipement utilisé.

Cette dernière disposition permet d'assurer une "traçabilité" du processus de personnalisation, c'est-à-dire qu'à tout moment, après avoir constaté un défaut affectant une carte, on peut en rechercher les causes au moyen de la date et en localisant l'atelier ou la machine susceptible d'être à l'origine du défaut.

D'autres aspects et avantages de l'invention apparaîtront dans la suite de la description en référence aux figures.

La figure 1 représente un système de personnalisation adapté à la mise en oeuvre du procédé selon l'invention.

Les figures 2 et 3 sont des organigrammes permettant de faciliter la compréhension du procédé selon l'invention.

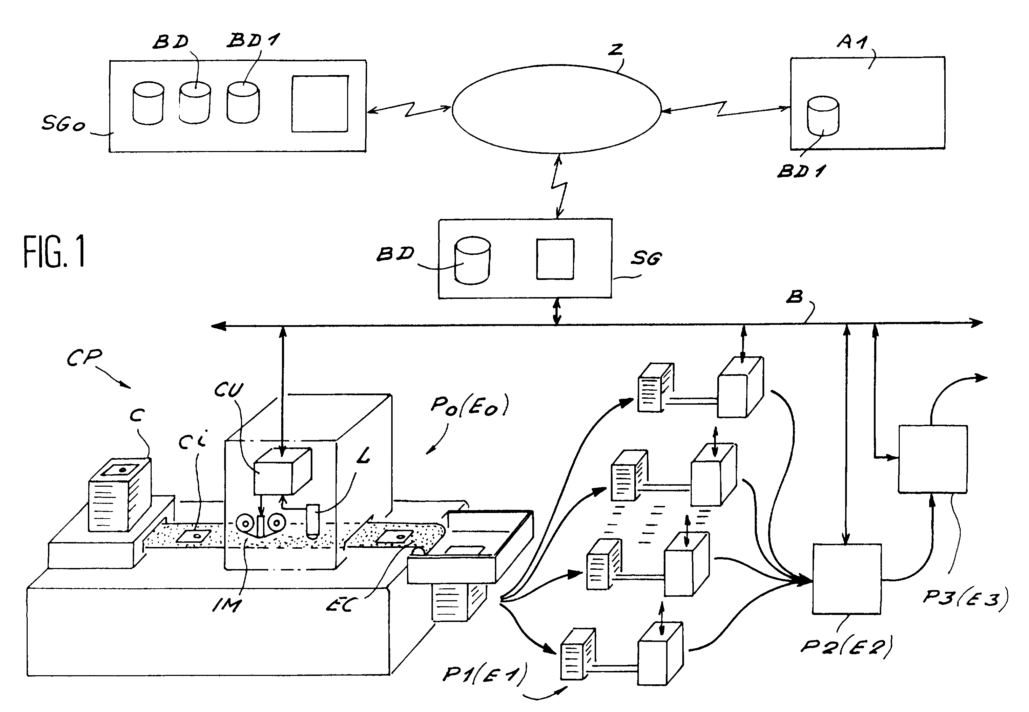

La figure 1 représente schématiquement un système de personnalisation grâce auquel le procédé selon l'invention peut être mis en oeuvre. Le système comprend un système central de gestion SG0 contenant une base de données centrale rassemblant l'ensemble des fichiers relatifs aux personnes pour lesquelles des cartes sont à personnaliser. Le système central SG0 communique par l'intermédiaire d'un réseau de communication Z avec une pluralité d'ateliers de personnalisation A1. Chaque atelier comporte un système de gestion SG relié d'une part au réseau Z et d'autre part aux différents postes d'une ou de plusieurs chaînes de personnalisation CP. Chaque système de gestion SG d'un atelier contient une base de données BD, BD1 extraite de la base de données centrale et contenant l'ensemble des fichiers correspondant à une série de cartes à personnaliser.

Comme représenté sur la figure, chaque chaîne de personnalisation CP comporte une pluralité de postes P0, P1, P2, P3 affectés respectivement à l'exécution d'étapes correspondantes E0, E1, E2, E3 du procédé. Chaque poste comporte une unité de commande CU reliée au système de gestion SG par exemple par l'intermédiaire d'un bus B d'un réseau local.

Conformément à l'invention, le procédé de personnalisation comporte une étape préliminaire d'identification E0 réalisée par un poste d'identification P0 placé au début de chaque chaîne CP. Le poste P0 est muni d'un système de dépilage des cartes vierges ou préimprimées à personnaliser C, d'un dispositif d'entraînement EC des cartes Ci, de moyens d'impression IM et d'un dispositif de lecture L. En sortie, les cartes peuvent être recueillies dans un bac de réception. Elles peuvent aussi être dirigées en flux continu vers le ou les postes P1 situés en aval. Selon l'exemple représenté, la première étape de personnalisation E1 est effectuée au moyen de plusieurs postes fonctionnant en parallèle. Cette disposition pourra être choisie si l'étape E1 nécessite un temps d'exécution très supérieur à celui des étapes amont et aval du procédé. Ce sera en particulier le cas pour l'étape de personnalisation électrique des cartes à mémoire dont la programmation pourrait être par exemple dix fois plus longue qu'une étape d'impression. On prévoira alors dix postes de personnalisation électrique en parallèle.

Sous la commande de l'unité de commande CU du poste P0, les moyens d'impression IM servent à inscrire sur la carte l'élément d'identification. Ils peuvent être d'un type quelconque adapté au matériau qui constitue la carte. Comme schématisé sur la figure, on peut utiliser une imprimante thermique pour appliquer une encre visible ou invisible à l'oeil. On peut également utiliser un dispositif de gravure par rayon laser. L'élément d'identification peut être sous la forme de caractères alphanumériques ou d'un code à barres. Enfin, l'inscription peut être effectuée sur une des faces de la carte ou sur une des tranches de celle-ci. En variante, l'impression peut être remplacée par un marquage magnétique au moyen d'une pastille magnétique collée sur la carte. Dans le cas où la carte est munie d'un circuit intégré, une autre possibilité consiste à effectuer la programmation, avec ou sans contact, de la mémoire du circuit intégré.

Le dispositif de lecture L relié à l'unité CU est adapté au type de marquage choisi.

Les autres postes P2, P3 qui sont affectés aux étapes ultérieures E2, E3 d'impression noir et blanc et couleur sont de type classique et ne nécessitent donc pas d'explications détaillées.

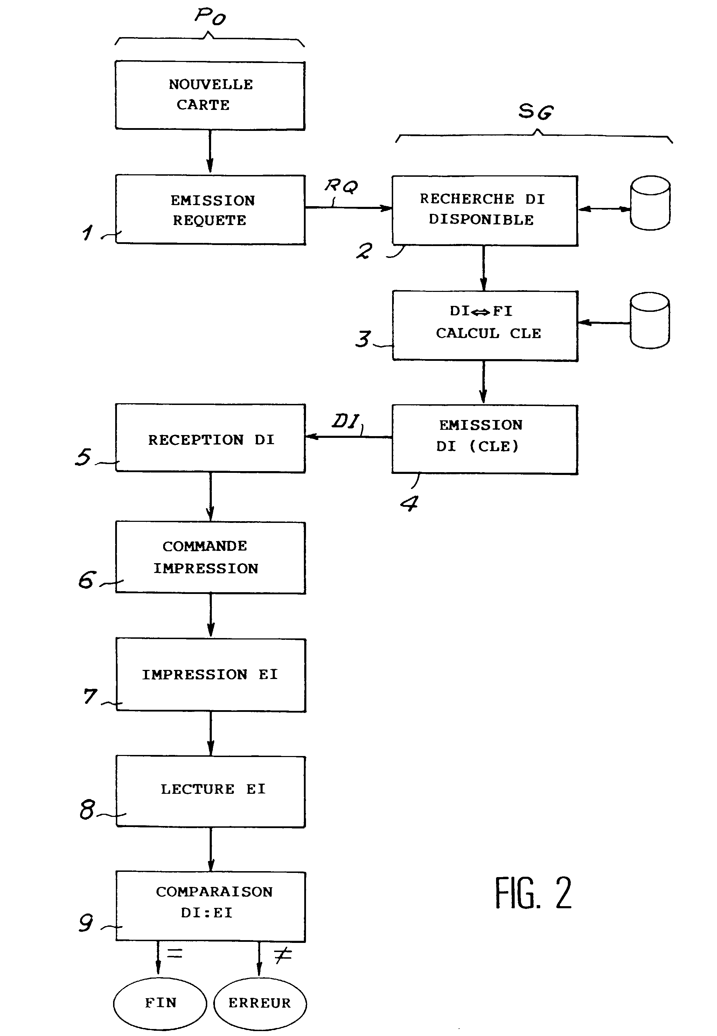

Pour expliquer l'étape d'identification P0, il convient de se reporter à l'organigramme de la figure 2. L'organigramme représente à gauche les opérations effectuées par le poste d'identification P0 et à droite celles effectuées par le système de gestion SG.

Lorsqu'une nouvelle carte est à personnaliser, le poste P0 envoie une requête RQ au système de gestion SG (étape 1). Le système SG recherche alors une donnée numérique d'identification DI disponible (étape 2) et l'associe à un fichier correspondant (étape 3). En option, la donnée d'identification DI peut être combinée avec une clé calculée en fonction de certaines données du fichier au moyen d'un algorithme de chiffrement approprié. La donnée d'identification DI est ensuite transmise au poste P0 (étapes 4 et 5). L'unité de commande CU commande alors les moyens d'impression IM (étape 6) de façon à effectuer l'impression d'un élément d'identification EI, tel qu'un code à barres, correspondant à la donnée d'identification DI (étape 7). L'élément d'identification EI est ensuite lu par le dispositif de lecture L (étape 8). Cette lecture permet à l'unité de commande CU de vérifier si l'élément d'identification EI effectivement inscrit sur la carte correspond bien à la donnée d'identification DI qui devrait lui correspondre (étape 9). En cas de divergence, l'unité CU produit un signal d'erreur pouvant être utilisé pour éjecter la carte par un dispositif non représenté ou pour déclencher une alarme.

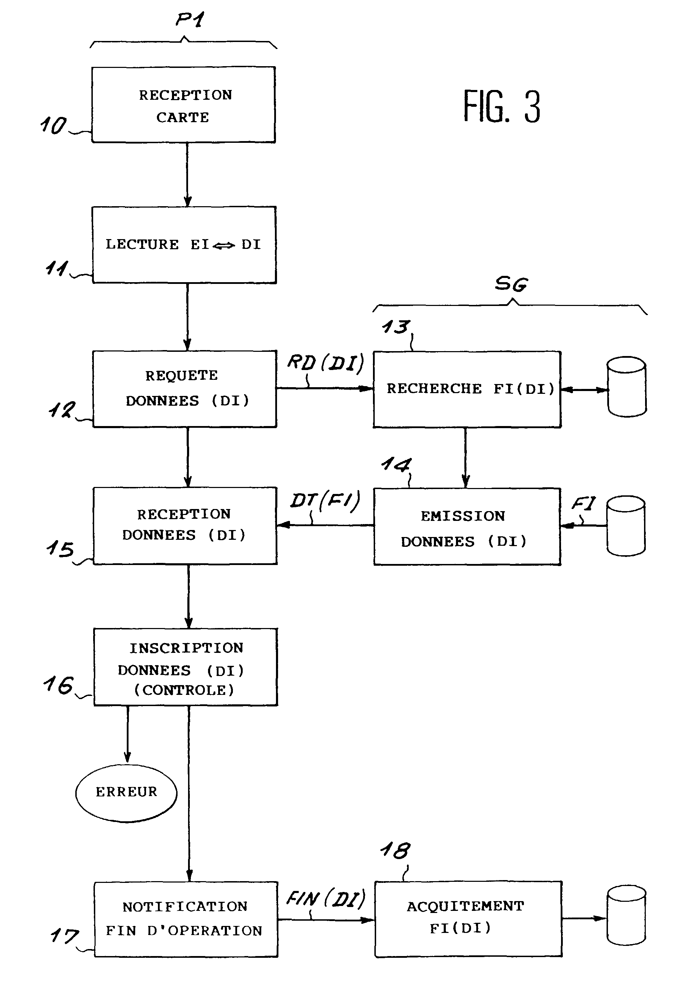

Une étape de personnalisation, par exemple E1, va maintenant être décrite au moyen de l'organigramme de la figure 3. Les opérations effectuées par le poste de personnalisation P1 correspondant sont représentées à gauche de la figure tandis que celles effectuées par le système de gestion SG sont placées à droite.

Lorsque le poste P1 détecte l'arrivée d'une carte à personnaliser (étape 10), une lecture de l'élément d'identification EI est effectuée pour en déduire la donnée numérique d'identification DI correspondante (étape 11). Le poste P1 envoie alors au système SG une requête RD(DI) pour l'informer d'une demande de données associées à la donnée d'identification DI (étape 12). En fonction de cette requête, le système SG recherche le fichier FI associé à la donnée d'identification DI. Lorsque ce fichier est identifié, la totalité ou une partie de ses données DT(FI) est transmise au poste P1 (étapes 14 et 15). Cette partie des données du fichier FI contiendra au moins toutes les données utiles à l'exécution de l'étape de personnalisation. Le poste P1 effectue alors l'inscription des données de personnalisation sur ou dans la carte et peut ensuite effectuer un contrôle par relecture des données inscrites (étape 16). Si aucune erreur n'est détectée, le poste P1 transmet au système SG une notification de fin d'opération FIN(DI) (étape 17). En réponse à cette notification, le système SG procède à l'acquittement de l'étape E1 pour le fichier associé à la donnée d'identification DI (étape 18). Cet acquittement peut consister à inscrire dans le fichier une donnée représentative de l'étape de personnalisation qui vient d'être effectuée. Dans le cas où il s'agit de la dernière étape de personnalisation, l'acquittement peut s'accompagner d'une libération de la donnée d'identification (DI) de façon à permettre sa réutilisation ultérieure pour une autre carte de la série. Si par contre on souhaite conserver la correspondance entre la donnée d'identification et le fichier associé, cette libération n'est pas effectuée.

Dans le cas où un contrôle par relecture n'est pas effectué après l'inscription des données de personnalisation (étape 16), les étapes 17 et 18 pourraient être supprimées. Il conviendrait alors qu'un acquittement préliminaire soit effectué au cours d'une des étapes 13 ou 14, l'acquittement étant confirmé au début de l'exécution de l'étape de personnalisation ultérieure. Il est à noter qu'une étape de personnalisation pourrait être subdivisée en plusieurs sous-étapes successives pilotées par une même unité de commande CU. Dans un tel cas, chaque sous-étape pourrait aussi débuter par une lecture de l'élément d'identification. Aussi, hormis pour la première sous-étape, l'accès aux données correspondantes peut se faire sans nécessiter un transfert de fichier à partir du système SG mais simplement à partir de la mémoire de l'unité de commande si celle-si a déjà reçu ces données au cours de la première sous-étape.

Le développement des programmes de mise en oeuvre des opérations qui viennent d'être décrites peut être facilement réalisé par l'homme du métier à partir des explications qui précèdent. Bien entendu, de nombreuses variantes de réalisation équivalentes peuvent être envisagées sans sortir du cadre de l'invention.

## Revendications

1. Procédé de personnalisation en série de cartes (C), du type utilisant une base de données (BD) comprenant des fichiers (FI) associés respectivement à des personnes pour lesquelles des cartes personnalisées doivent être réalisées, chacun desdits fichiers contenant des informations spécifiques à une personne, ledit procédé comportant pour chaque carte à personnaliser une pluralité d'étapes de personnalisation (E1, E2, E3) consistant chacune à inscrire (16) sur et/ou dans ladite carte une partie des informations d'un fichier déterminé, ledit procédé étant caractérisé en ce qu'il comporte en outre une étape préliminaire d'identification (E0) consistant :
- à attribuer (2) une donnée d'identification (DI) à chaque nouvelle carte (Ci) à personnaliser et à un des fichiers (FI) de la base de données (BD) et à associer (3) dans la base de données (BD) ladite donnée d'identification (DI) audit fichier (FI) et
- à marquer (6, 7) ladite nouvelle carte (Ci) avec un élément d'identification (EI) représentatif de ladite donnée d'identification (DI)
et en ce que chacune desdites étapes de personnalisation (E1, E2, E3) d'une carte débute par une lecture (11) de l'élément d'identification (EI) figurant sur ladite carte et la détermination de la donnée d'identification (DI) correspondante et se poursuit par un accès (12-15) à ladite partie d'informations du fichier (FI) qui est associé à ladite donnée d'identification (DI).

2. Procédé selon la revendication 1, caractérisé en ce que ladite donnée d'identification (DI) est fonction d'une partie au moins des informations du fichier qui doivent être inscrites sur et/ou dans la carte.

3. Procédé selon l'une des revendications 1 ou 2, caractérisé en ce que chaque donnée d'identification (DI) est specifique d'une seule des cartes en cours de personnalisation, et une donnée d'identification (DI) d'une carte dont la personnalisation est terminée peut être réattribuée à une nouvelle carte à personnaliser.

4. Procédé selon l'une des revendications 1 ou 2, caractérisé en ce que chaque donnée d'identification (DI) est spécifique d'un seul desdits fichiers de la base de données (BD) et en ce qu'une donnée d'identification (DI) déjà attribuée à un fichier d'une base de données (BD) peut être attribuée à un autre fichier d'une autre base de données (BD1).

5. Procédé selon l'une des revendications 1 ou 2, caractérisé en ce que ladite donnée d'identification (DI) est spécifique d'un seul fichier.

6. Procédé selon l'une des revendications 1 à 5, caractérisé en ce que chaque donnée d'identification (DI) est fonction de données relatives aux circonstances de réalisation de la personnalisation, telles que sa date et/ou un numéro représentatif de l'équipement utilisé.

7. Procédé selon l'une des revendications 1 à 6, caractérisé en ce que chaque étape de personnalisation (E1, E2, E3) effectuée sur une carte s'accompagne de l'écriture dans le fichier associé d'une donnée représentative de ladite étape.

8. Procédé selon l'une des revendications 1 à 7, caractérisé en ce que le marquage d'un élément d'identification (EI) est effectué par un procédé d'impression utilisant une encre visible ou invisible à l'oeil.

9. Procédé selon l'une des revendications 1 à 7, caractérisé en ce que le marquage d'un élément d'identification (EI) est effectué au moyen d'une pastille magnétique.

10. Procédé selon l'une des revendications 1 à 7, caractérisé en ce que le marquage d'un élément d'identification (EI) est effectué par gravure sur une des faces ou sur une des tranches de la carte.

## Patentansprüche

1. Verfahren zur serienmäßigen kundenindividuellen Anpassung von Karten (C) der Art, die eine Datenbank (BD) mit Dateien (FI) nutzt, die jeweils Personen zugeordnet werden, für die kundenindividuell angepaßte Karten hergestellt werden sollen, wobei jede der Dateien für eine Person spezifische Daten enthält, welches Verfahren für jede kundenindividuell anzupassende Karte mehrere Anpassungsschritte (E1, E2, E3) umfaßt, die jeweils darin bestehen, auf und/oder in die Karte einen Teil der Daten einer bestimmten Datei zu schreiben, welches Verfahren dadurch gekennzeichnet ist, daß es ferner einen vorausgehenden Identifizierungsschritt (EO) umfaßt, der darin besteht:
- jeder neuen, kundenindividuell anzupassenden Karte (Ci) und einer der Dateien (FI) der Datenbank (BD) eine Identifizierungsinformation (DI) zuzuweisen (2) und diese Identifizierungsinformation (DI) in der Datenbank (BD) der Datei (FI) zuzuordnen (3) und
- die neue Karte (Ci) mit einem Identifizierungselement (EI) zu kennzeichnen (6, 7), das die Identifizierungsinformation (DI) darstellt
sowie dadurch, daß jeder der Schritte der kundenindividuellen Anpassung (E1, E2, E3) einer Karte mit dem Lesen (11) des Identifizierungselements (El), das sich auf der Karte befindet, und der Bestimmung der entsprechenden Identifizierungsinformation (DI) beginnt und mit einem Zugriff (12-15) auf den Teil der Daten der Datei (FI) fortgesetzt wird, die der Identifizierungsinformation (DI) zugeordnet ist.

2. Verfahren nach Anspruch 1, dadurch gekennzeichnet, daß die Identifizierungsinformation (Dl) abhängig ist von zumindest einem Teil der Daten der Datei, die auf und/oder in die Karte geschrieben werden sollen.

3. Verfahren nach einem der Ansprüche 1 oder 2, dadurch gekennzeichnet, daß jede Identifizierungsinformation (DI) kennzeichnend für eine einzige der Karten ist, die gerade kundenindividuell angepaßt werden, und eine Identifizierungsinformation (DI) einer Karte, deren kundenindividuelle Anpassung beendet ist, kann einer neuen kundenindividuell anzupassenden Karte zugewiesen werden.

4. Verfahren nach einem der Ansprüche 1 oder 2, dadurch gekennzeichnet, daß jede Identifizierungsinformation (DI) kennzeichnend für eine einzige der Dateien der Datenbank (BD) ist, sowie dadurch, daß eine Identifizierungsinformation (DI), die bereits einer Datei einer Datenbank (BD) zugewiesen wurde, einer anderen Datei einer anderen Datenbank (BD1) zugewiesen werden kann.

5. Verfahren nach einem der Ansprüche 1 oder 2, dadurch gekennzeichnet, daß die Identifizierungsinformation (DI) nur für eine einzige Datei kennzeichnend ist.

6. Verfahren nach einem der Ansprüche 1 bis 5, dadurch gekennzeichnet, daß jede Identifizierungsinformation (DI) abhängig von Daten ist, die die Umstände der Herstellung der kundenindividuellen Anpassung betreffen, wie ihr Datum und/oder eine Nummer, die für die verwendete Ausrüstung steht.

7. Verfahren nach einem der Ansprüche 1 bis 6, dadurch gekennzeichnet, daß jeder Schritt der kundenindividuellen Anpassung (E1, E2, E3) einer Karte mit dem Schreiben einer diesem Schritt entsprechenden Information in die Datei einhergeht.

8. Verfahren nach einem der Ansprüche 1 bis 7, dadurch gekennzeichnet, daß die Kennzeichnung eines Identifizierungselements (EI) mittels eines Aufdruckverfahrens mit für das Auge sichtbarer oder unsichtbarer Tinte erfolgt.

9. Verfahren nach einem der Ansprüche 1 bis 7, dadurch gekennzeichnet, daß die Kennzeichnung eines Identifizierungselements (EI) mittels eines Magnetplättchens erfolgt.

10. Verfahren nach einem der Ansprüche 1 bis 7, dadurch gekennzeichnet, daß die Kennzeichnung eines Identifizierungselements (EI) durch Gravur auf eine der Seiten oder einen der Abschnitte der Karte erfolgt.

## Claims

1. Process for serial personalisation of cards (C), of the type using a database (BD) comprising files (FI) associated respectively with persons for whom personalised cards have to be produced, each of said files containing information specific to a person, said process comprising for each card to be personalised a plurality of personalisation stages (E1, E2, E3) each consisting in writing (16) on and/or in said card a part of the information from a given file, said process being characterised in that it additionally comprises a preliminary identification stage (EO) consisting in:
- attributing (2) identification data (DI) to each new card (Ci) to be personalised and to one of the files (FI) of the database (BD) and associating (3) said identification data (DI) to said file (FI) in the database (BD) and
- marking (6, 7) said new card (Ci) with an identification element (EI) representative of said identification data (DI),
and in that each of said personalisation stages (E1, E2, E3) of a card starts by reading (11) the identification element (EI) marked on said card and determining the corresponding identification data (DI) and continues by access (12-15) to said part of the information of the file (FI) which is associated with said identification data (DI).

2. Process according to claim 1, characterised in that said identification data (DI) depends on part at least of the information of the file which has to be written on and/or in the card.

3. Process according to one of claims 1 or 2, characterised in that in each case the identification data (DI) is specific to just one of the cards being personalised, and identification data (DI) of a card whose personalisation is finished can be reassigned to a new card to be personalised.

4. Process according to one of claims 1 or 2, characterised in that in each case the identification data (DI) is specific to just one of said files of the database (BD) and in that identification data (DI) already assigned to a file of a database (BD) can be assigned to another file of another database (BD1).

5. Process according to one of claims 1 or 2, characterised in that said identification data (DI) is specific to just one file.

6. Process according to one of claims 1 to 5, characterised in that in each case the identification data (DI) depends on data relating to the circumstances of production of the personalisation, such as its date and/or a number representative of the equipment used.

7. Process according to one of claims 1 to 6, characterised in that each personalisation stage (E1, E2, E3) carried out on a card is accompanied by writing of data representative of said stage in the associated file.

8. Process according to one of claims 1 to 7, characterised in that the marking of an identification element (EI) is carried out by a printing process using an ink which is visible or invisible to the eye.

9. Process according to one of claims 1 to 7, characterised in that the marking of an identification element (EI) is carried out by means of a magnetic label.

10. Process according to one of claims 1 to 7, characterised in that the marking of an identification element (EI) is carried out by etching on one of the faces or on one of the edges of the card.
